# EUROPEAN PATENT SPECIFICATION

(11) **EP 0 832 037 B1**
(45) Date of publication and mention of the grant of the patent: **14.04.1999**
(21) Application number: 96921940.1
(22) Date of filing: 05.06.1996
(51) Int. Cl.: C01B 3/36

(54) **A METHOD FOR FLAME STABILIZATION IN A PROCESS FOR PREPARING SYNTHESIS GAS**
METHODE ZUR FLAMMENSTABILISATION IN EINEM VERFAHREN ZUR HERSTELLUNG VON SYNTHESEGAS
PROCEDE DE STABILISATION DE FLAMME DANS UN PROCESSUS DE PREPARATION DE GAZ DE SYNTHESE

(30) Priority: 06.06.1995 EP 95201487
(43) Date of publication of application: 01.04.1998
(73) Proprietor: SHELL INTERNATIONALE RESEARCH MAATSCHAPPIJ B.V., 2596 HR Den Haag (NL)
(72) Inventor: OORTWIJN, Peter, NL-2596 HR The Hague (NL); WENTINCK, Hendrik, Martinus, NL-1031 CM Amsterdam (NL)
(74) Representative: Zeestraten, Albertus Wilhelmus Joannes
(86) International application number: PCT/EP96/02469
(87) International publication number: WO 96/39354

(56) References cited:
- EP-A- 0 082 634
- EP-A- 0 428 373
- US-A- 4 836 831
- US-A- 5 458 808

## Description

The present invention relates to a method for flame stabilization in a process for preparing synthesis gas by partial oxidation of a gaseous hydrocarbon-containing fuel and an oxygen-containing gas.

In such a process for preparing synthesis gas an oxygen-containing gas, which is applied as an oxidiser, and a gaseous hydrocarbon-containing fuel are supplied to a gasification zone through a burner, e.g. a multi-orifice (co-annular) burner comprising a concentric arrangement of n passages or channels coaxial with the longitudinal axis of said burner, wherein n is an integer > 2, and wherein autothermically a gaseous stream containing synthesis gas is produced under appropriate conditions.

Such co-annular burners contain substantially cylindrical internals which separate the oxidiser and the hydrocarbon-containing fuel until they reach the burner exit.

The oxygen-containing gas, which is applied as an oxidiser, is usually air or (pure) oxygen or steam or a mixture thereof. In order to control the temperature in the gasification zone a moderator gas (for example steam, water or carbon dioxide or a combination thereof) can be supplied to said zone. The moderator gas can be supplied through the fuel channel, the oxidiser channel or a separate channel of the burner.

Those skilled in the art will know the conditions of applying oxidiser and moderator gas.

Synthesis gas is a gas comprising carbon monoxide and hydrogen, and it is used, for example, as a clean medium-calorific value fuel gas or as a feedstock for the synthesis of methanol, ammonia or hydrocarbons, which latter synthesis yields gaseous hydrocarbons and liquid hydrocarbons such as gasoline, middle distillates, lub oils and waxes.

In the specification and in the claims the term gaseous hydrocarbon-containing fuel will be used to refer to hydrocarbon-containing fuel that is gaseous at gasifier feed pressure and temperature.

According to an established process, synthesis gas is produced by partially oxidising in a reactor vessel a gaseous fuel such as gaseous hydrocarbon, in particular petroleum gas or natural gas, at a temperature in the range of from 1000 °C to 1800 °C and at a pressure in the range of from 0.1 MPa to 12 MPa abs. with the use of an oxygen-containing gas.

Synthesis gas will often be produced near or at a crude oil refinery because the produced synthesis gas can directly be applied as a feedstock for the production of middle distillates, ammonia, hydrogen, methanol or as a fuel gas, for example, for heating the furnaces of the refinery or more efficiently for the firing of gas turbines to produce electricity and heat.

In gas burners applied in partial oxidation processes for preparing synthesis gas it has appeared that the burner lifetime is restricted by phenomena of retraction of tips due to high temperature carburisation and oxidation. Because of such phenomena serious burner damage will occur and the on-stream tine of the reactor will be limited.

Therefore, there is a need for burners having a long lifetime which are less sensitive to the above phenomena than existing burners. A burner design has already been proposed wherein the overall flow and mixing pattern of the reactants ensures that no burners parts come in contact with hot gases from the combustion zone and this burner is capable of operating at high flame temperatures without burner-wear problems. (Vide the article "Improve syngas production using autothermal reforming" by T S Christensen and I I Primdahl in "Hydrocarbon Processing", March 1994, p. 42). However, if the flame is lifted from the burner this could lead to a product gas mixture of undesirable changing composition and to changing temperatures in the reactor. As a result, noise (level more than 120 dB) and strong mechanical vibrations of the burner and gasifier may occur. Such vibrations can be harmful to the refractory lining of the reactor.

It has now been found that the burner performance is influenced advantageously by flame stabilization and therefore care should be taken to stabilize the flame on the burner tips.

It is an object of the invention to provide a method for flame stabilization on the burner tips which solves the above problems.

The invention therefore provides a method for stabilizing the flame on the tips of burner internals in a process for preparing synthesis gas by partial oxidation of a gaseous hydrocarbon-containing fuel comprising the steps of:
a) supplying a gaseous hydrocarbon-containing fuel, a moderator gas and an oxidiser through a burner to a reactor, wherein the mass flow of the moderator gas is adjusted such that the moderator gas concentration does not exceed a predetermined limit;
b) effecting process conditions such that the flame is contacting the burner internal tips;
c) re-adjusting the velocities and mass flows of the fuel and/or oxidiser and/or moderator gas in case of flame-lifting from the burner internal tips in such a manner that the flame is restabilized on the burner internal tips; and wherein in step c) the moderator gas concentration does not exceed the said limit of step a).

An expert will know the general burner design conditions in which a flame contacts the burner tips.

In this manner the flame is stabilized on the burner internal tips and by applying a low amount of moderator gas it is possible to prepare a CO-rich product gas with a relatively high CO/H₂ ratio which is advantageous for downstream processes such as e.g. the Shell Middle Distillates Process (SMDS). The burner internal tips are made of a suitable material which is able to withstand such a flame, e.g. ceramic materials (e.g. silicon carbide or silicon nitride), noble metals or alloys thereof (e.g. Pt and/or Rh).

Since the flame at the burner exit generates a sound flame lifting from the burner internal tips can be observed by a change in noise level.

Noise levels are e.g. monitored by means of (piezo resistive) pressure transducers.

Another possibility to monitor flame lifting is optically e.g. by means of an optical probe which may be inserted into a burner channel, e.g. in the central channel of the burner. Flame lifting produces different flame spectra, which are analysed.

The invention is based upon the idea that in particular by means of adjusting the moderator gas concentration the flame position/stabilization with respect to the burner exit can be monicored at given process conditions such as throughput, pressure, temperature and the like. Flame monitoring/control is in particular of importance in case of natural gas feedstock changing in composition or recycle gas of varying composition being added to the natural gas feedstock.

Advantageously, moderator gas such as steam or CO₂ can be supplied e.g. with a velocity of 3-10 m/s in the channel between gaseous hydrocarbon-containing fuel and oxidiser. The channel width is e.g. 1-2 mm.

The invention will now be described by way of example in more detail by reference to Examples A, B and C.

| Feed: Natural Gas with the following typical composition | |
|---|---|
| CH₄ | 94.4% by volume |
| C₂H₆ | 3.0% |
| C₃H₈ | 0.5% |
| C₄H₁₀ | 0.2% |
| C₅H₁₂+ | 0.2% |
| CO₂ | 0.2% |
| N₂ | 1.5% |

The supply temperature to the burner of this feedstock is 150-400 °C. The oxidiser is 99.5% pure O₂ with a supply temperature of 150-300 °C.

The burner is operating in the flame stabilised mode at a typical reactor pressure of 2-7 MPa and a reactor/syngas temperature of 1200-1500 °C. The moderator gas is steam.

Example A represents a burner wherein the fuel velocity is larger than the oxidiser velocity (fuel blast burner) and Examples B and C represent a burner wherein the oxidiser velocity is larger than the fuel velocity (oxygen blast burner).

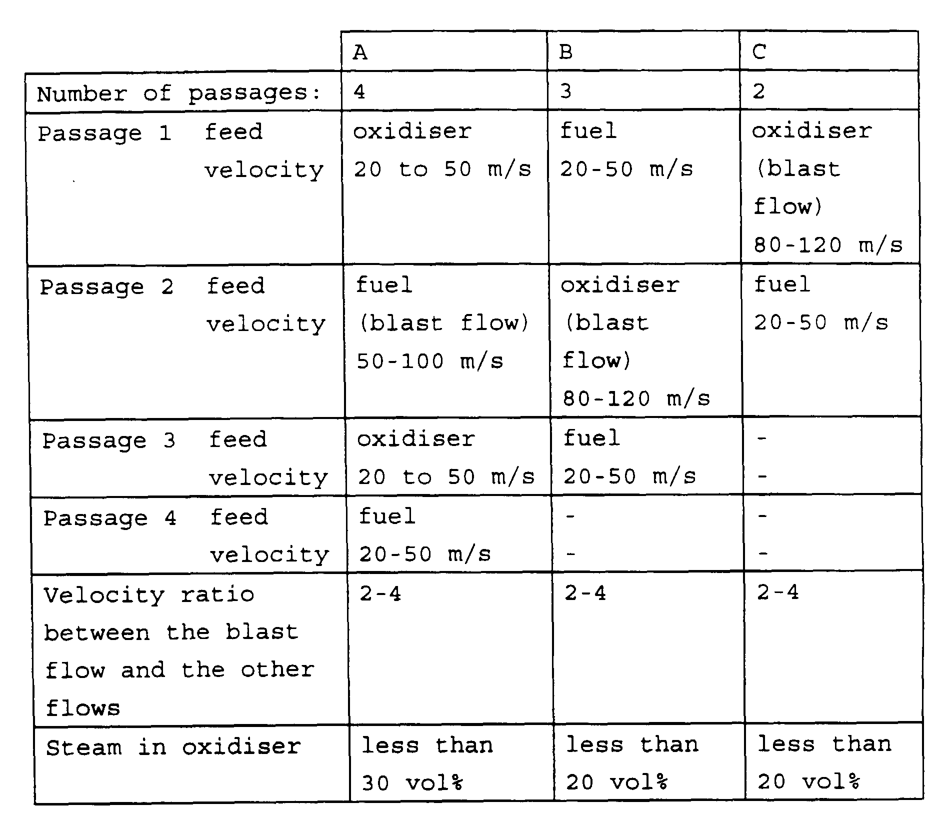

In the case that the natural gas feed also contains moderator gas, the maximum amount of moderator gas which can be added to the oxidiser need to be reduced to guarantee flame stabilization.

In the case that the moderator gas also contains CO₂ or N₂ the maximum molar concentration of moderator gas in the oxidiser may change to guarantee flame stabilization.

These reductions or changes are in accordance with the changes in the laminar flame velocity of premixed stoichiometric mixtures of the oxidiser and the fuel, such as is known by experts in the field.

In the case that the moderator gas is not added to the oxidiser until the burner exit but is injected via the small channel or slit between the oxidiser channel and the fuel channel, the moderator gas may also contain CO, H₂ and hydrocarbons up to 20 vol% total. In this case the moderator gas flows through a slit of 1-2 mm wide at a typical velocity of 5-10 m/s.

It will be appreciated by those skilled in the art that any burner slit widths suitable for the purpose can be applied, dependent on the burner capacity.

Advantageously, the first or central passage of the burner has a diameter up to 70 mm, whereas the remaining concentric passages have slit widths in the range of 1-20 mm.

It has appeared that when the oxidiser velocity is higher than the fuel velocity, the flame will lift from the burner internal tip, if the moderator gas concentration in the oxidiser is more than 20 vol%.

When the fuel velocity is higher than the oxidiser velocity, it appears that the flame will lift from the burner internal tip if the moderator gas concentration in the oxidiser is more than 30 vol%.

Various modifications of the present invention will become apparent to those skilled in the art from the foregoing description. Such modifications are intended to fall within the scope of the appended claims.

## Claims

1. A method for stabilizing the flame on the tips of burner internals in a process for preparing synthesis gas by partial oxidation of a gaseous hydrocarbon-containing fuel comprising the steps of:
a) supplying a gaseous hydrocarbon-containing fuel, a moderator gas and an oxidiser through a burner to a reactor, wherein the mass flow of the moderator gas is adjusted such that the moderator gas concentration does not exceed a predetermined limit;
b) effecting process conditions such that the flame is contacting the burner internal tips;
c) re-adjusting the velocities and mass flows of the fuel and/or oxidiser and/or moderator gas in case of flame-lifting from the burner internal tips in such a manner that the flame is restabilized on the burner internal tips; and wherein in step c) the moderator gas concentration does not exceed the said limit of step a).

2. The method as claimed in claim 1, wherein the burner is a multi-orifice (co-annular) burner comprising a concentric arrangement of n passages or channels coaxial with the longitudinal axis of said burner, wherein n is an integer ≥ 2.

3. The method as claimed in claim 1 or 2, wherein the flame is monitored.

4. The method as claimed in claim 3, wherein the flame is monitored by noise detection, e.g. by means of pressure transducers.

5. The method as claimed in claim 3, wherein the flame is monitored optically.

6. The method as claimed in claim 5, wherein the flame is monitored by an optical probe inserted in a burner channel.

7. The method as claimed in claim 6, wherein the optical probe is inserted in the central channel of the burner.

8. The method as claimed in any one of claims 1-7, wherein the rims are made of ceramics, noble metals or alloys thereof.

9. The method as claimed in any one of claims 2-8, wherein the moderator gas is passed through a channel or slit between the gaseous hydrocarbon-containing fuel channel and the oxidiser channel.

10. The method as claimed in any one of claims 1-8, wherein the moderator gas is supplied with the gaseous hydrocarbon-containing fuel.

11. The method as claimed in any one of claims 1-8, wherein the moderator gas is supplied with the oxidiser.

12. The method as claimed in any one of claims 1-11, wherein the moderator gas is steam, water, carbon dioxide or a combination thereof.

13. The method as claimed in any one of claims 1-12, wherein the fuel velocity is higher than the oxidiser velocity and the mass flow of the moderator gas is adjusted such that the concentration of moderator gas in the oxidiser is less than 30 vol%.

14. The method as claimed in any one of claims 1-12, wherein the oxidiser velocity is higher than the fuel velocity and the mass flow of the moderator gas is adjusted such that the concentration of moderator gas in the oxidiser is less than 20 vol%.

## Patentansprüche

1. Verfahren zum Stabilisieren der Flamme auf den Spitzen von Brennereinsätzen in einem Verfahren zur Herstellung von Synthesegas durch partielle Oxidation eines gasförmigen, kohlenwasserstoffhältigen Brennstoffes, das die folgenden Stufen umfaßt:
a) Zuführen eines gasförmigen, kohlenwasserstoffhältigen Brennstoffes, eines Moderatorgases und eines Oxidators durch einen Brenner zu einem Reaktor, wobei der Massenstrom des Moderatorgases derart eingestellt wird, daß die Moderatorgaskonzentration einen zuvor festgelegten Grenzwert nicht überschreitet;
b) Einstellen der Verfahrensbedingungen derart, daß die Flamme die Brennereinsatzspitzen berührt;
c) Nachjustieren der Geschwindigkeiten und der Massenströme des Brennstoffs und/oder Oxidators und/oder Moderatorgases im Falle eines Abhebens der Flamme von den Brennereinsatzspitzen, derart, daß die Flamme auf den Brennereinsatzspitzen wieder stabilisiert wird; wobei in Stufe c) die Moderatorgaskonzentration den angegebenen Grenzwert von Stufe a) nicht überschreitet.

2. Verfahren nach Anspruch 1, worin der Brenner ein (co-annularer) Mehrfachbrenner ist, der eine konzentrische Anordnung von n Durchlässen oder Kanälen umfaßt, die coaxial zur Längsachse des Brenners angeordnet sind, worin n eine ganze Zahl ≥ 2 ist.

3. Verfahren nach Anspruch 1 oder 2, worin die Flamme überwacht wird.

4. Verfahren nach Anspruch 3, worin die Flamme durch Lärmdetektion überwacht wird, beispielsweise mittels Drucktransducern.

5. Verfahren nach Anspruch 3, worin die Flamme optisch überwacht wird.

6. Verfahren nach Anspruch 5, worin die Flamme durch eine in einen Brennerkanal eingesetzte optische Sonde überwacht wird.

7. Verfahren nach Anspruch 6, worin die optische Sonde in den Mittelkanal des Brenners eingesetzt ist.

8. Verfahren nach einem der Ansprüche 1 bis 7, worin die Ränder aus Keramik, Edelmetallen oder Legierungen hievon bestehen.

9. Verfahren nach einem der Ansprüche 2 bis 8, worin das Moderatorgas durch einen Kanal oder Schlitz zwischen dem Kanal für den gasförmigen, kohlenwasserstoffhältigen Brennstoff und dem Kanal für den Oxidator durchgeführt wird.

10. Verfahren nach einem der Ansprüche 1 bis 8, worin das Moderatorgas zusammen mit dem gasförmigen, kohlenwasserstoffhältigen Brennstoff zugeführt wird.

11. Verfahren nach einem der Ansprüche 1 bis 8, worin das Moderatorgas zusammen mit dem Oxidator zugeführt wird.

12. Verfahren nach einem der Ansprüche 1 bis 11, worin das Moderatorgas Dampf, Wasser, Kohlendioxid oder eine Kombination hievon ist.

13. Verfahren nach einem der Ansprüche 1 bis 12, worin die Brennstoffgeschwindigkeit höher ist als die Oxidatorgeschwindigkeit und der Massenstrom des Moderatorgases derart eingestellt wird, daß die Moderatorgaskonzentration im Oxidator unter 30 Vol.-% beträgt.

14. Verfahren nach einem der Ansprüche 1 bis 12, worin die Oxidatorgeschwindigkeit höher ist als die Brennstoffgeschwindigkeit und der Massenstrom des Moderatorgases derart eingestellt wird, daß die Moderatorgaskonzentration im Oxidator unter 20 Vol.-% beträgt.

## Revendications

1. Procédé pour stabiliser la flamme sur les extrémités des parties intérieures d'un brûleur dans un procédé de préparation de gaz de synthèse par oxydation partielle d'un combustible contenant un hydrocarbure gazeux comprenant les étapes suivantes :
a) l'apport d'un combustible contenant un hydrocarbure gazeux, d'un gaz modérateur et d'un oxydant par un brûleur dans un réacteur, dans lequel le débit massique du gaz modérateur est ajusté de telle sorte que la concentration en gaz modérateur n'excède pas une limite prédéterminée;
b) la réalisation de conditions de traitement de telle sorte que la flamme soit mise au contact des extrémités des parties internes du brûleur;
c) le réajustement des vitesses et des débits massiques du combustible et/ou de l'oxydant et/ou du gaz modérateur dans le cas d'un soulèvement de la flamme des extrémités des parties internes du brûleur d'une manière telle que la flamme soit restabilisée sur les extrémités des parties internes du brûleur; et dans lequel dans l'étape c) la concentration en gaz modérateur n'excède pas la limite précitée de l'étape a).

2. Procédé suivant la revendication 1, dans lequel le brûleur est un brûleur (coannulaire) à orifices multiples comprenant un agencement concentrique de n passages ou canaux coaxiaux à l'axe longitudinal du brûleur, dans lequel n est un nombre entier de ≤ 2.

3. Procédé suivant l'une ou l'autre des revendications 1 et 2, dans lequel la flamme est contrôlée.

4. Procédé suivant la revendication 3, dans lequel la flamme est contrôlée par détection du bruit, par exemple au moyen de capteurs de pression.

5. Procédé suivant la revendication 3, dans lequel la flamme est contrôlée optiquement.

6. Procédé suivant la revendication 5, dans lequel la flamme est contrôlée par une sonde optique introduite dans un canal du brûleur.

7. Procédé suivant la revendication 6, dans lequel la sonde optique est introduite dans le canal central du brûleur.

8. Procédé suivant l'une quelconque des revendications 1 à 7, dans lequel les bords sont faits de produits céramiques, de métaux nobles ou de leurs alliages.

9. Procédé suivant l'une quelconque des revendications 2 à 8, dans lequel le gaz modérateur passe par un canal ou une fente entre le canal à combustible contenant un hydrocarbure gazeux et le canal à oxydant.

10. Procédé suivant l'une quelconque des revendications 1 à 8, dans lequel le gaz modérateur est amené avec le combustible contenant un hydrocarbure gazeux.

11. Procédé suivant l'une quelconque des revendications 1 à 8, dans lequel le gaz modérateur est amené avec l'oxydant.

12. Procédé suivant l'une quelconque des revendications 1 à 11, dans lequel le gaz modérateur est de la vapeur, de l'eau, du dioxyde de carbone ou une combinaison de ceux-ci.

13. Procédé suivant l'une quelconque des revendications 1 à 12, dans lequel la vitesse du carburant est plus élevée que la vitesse de l'oxydant et le débit massique du gaz modérateur est ajusté de telle sorte que la concentration en gaz modérateur dans l'oxydant soit inférieure à 30 % en volume.

14. Procédé suivant l'une quelconque des revendications 1 à 12, dans lequel la vitesse de l'oxydant est supérieure à la vitesse du combustible et le débit massique du gaz modérateur est ajusté de telle sorte que la concentration en gaz modérateur dans l'oxydant soit inférieure à 20 % en volume.
